# FASCICULE DE BREVET EUROPEEN

(11) **EP 4 609 183 B1**
(45) Date de publication et mention de la délivrance du brevet: **21.10.2026**
(21) Numéro de dépôt: 23817480.9
(22) Date de dépôt: 26.10.2023
(51) Int. Cl.: G01N 23/2252, G01N 23/2209

(54) **OPTIMISATION D'UNE MICROSONDE WDS POUR UNE DÉTECTION DU LITHIUM**
OPTIMIERUNG EINER WDS-MIKROSONDE ZUR LITHIUMDETEKTION
OPTIMIZATION OF A WDS MICROPROBE FOR LITHIUM DETECTION

(30) Priorité: 27.10.2022 FR 2211207
(43) Date de publication de la demande: 03.09.2025
(73) Titulaire: Commissariat à l'Energie Atomique et aux Energies Alternatives, 75015 Paris (FR)
(72) Inventeur: BRACKX, Emmanuelle, 30630 GOUDARGUES (FR); SCHWEIZER, Pia, 84000 AVIGNON (FR)
(74) Mandataire: Santarelli
(86) Numéro de dépôt international: PCT/FR2023/051688
(87) Numéro de publication internationale: WO 2024/089368

(56) Documents cités:
- LLOVET XAVIER ET AL: "Electron probe microanalysis: A review of recent developments and applications in materials science and engineering", PROGRESS IN MATERIALS SCIENCE, vol. 116, 100673, 25 May 2020 (2020-05-25), pages 1 - 90, XP086386965, ISSN: 0079-6425, [retrieved on 20200525], DOI: 10.1016/J.PMATSCI.2020.100673
- TORMA PEKKA T. ET AL: "Performance and Properties of Ultra-Thin Silicon Nitride X-ray Windows", IEEE TRANSACTIONS ON NUCLEAR SCIENCE, vol. 61, no. 1, 1 February 2014 (2014-02-01), USA, pages 695 - 699, XP093038374, ISSN: 0018-9499, DOI: 10.1109/TNS.2014.2298434
- HOVINGTON PIERRE ET AL: "Can we detect Li K X-ray in lithium compounds using energy dispersive spectroscopy?", SCANNING, vol. 38, no. 6, 1 November 2016 (2016-11-01), US, pages 571 - 578, XP055846947, ISSN: 0161-0457, DOI: 10.1002/sca.21302
- POLKONIKOV VLADIMIR ET AL: "Periodic Multilayer for X-ray Spectroscopy in the Li K Range", APPLIED SCIENCES, vol. 11, no. 14, 6385, 10 July 2021 (2021-07-10), pages 1 - 7, XP093038298, DOI: 10.3390/app11146385

## Description

### DOMAINE TECHNIQUE

Le domaine technique de l'invention est celui de l'analyse élémentaire des matériaux contenant du lithium dans le cadre du recyclage des déchets ou de l'économie circulaire (batterie Li-ion, alliage aéronautique, verres, etc.).

### ÉTAT DE LA TECHNIQUE ANTÉRIEURE

Le lithium, 3^{ème} élément de la classification périodique du tableau de Mendeleïev, est utilisé pour de nombreuses applications allant du domaine de l'énergie, comme pour les batteries Li-ion des véhicules électriques, jusqu'aux domaines des matériaux céramiques, des verres industriels et des vitrocéramiques.

Dans le cadre de la présente invention, on cherche à réaliser une analyse quantitative, locale et non destructive du lithium.

Actuellement, l'analyse quantitative du lithium dans les matériaux est réalisée par des techniques destructives sur d'importantes masses d'échantillon (de l'ordre du gramme), telles que la spectrométrie de masse avec plasma à couplage inductif par ablation laser (LA-ICP-MS) ou la spectroscopie de plasma induit par laser (LIBS). Une analyse quantitative du lithium par des techniques non destructives n'est pas possible avec des instruments actuels standards d'analyse X.

Il faut également que l'analyse élémentaire soit locale. Une analyse élémentaire du lithium à l'échelle micrométrique, et plus précisément une analyse élémentaire locale par microstructure, est en effet fondamentale, car elle permet d'accéder localement à des grandeurs d'intérêts majeurs pour les procédés d'élaboration de matériaux contenant du lithium, comme, par exemple, les mécanismes de diffusion du lithium dans un matériau contenant différentes microstructures (par exemple une batterie lithium ayant subi de nombreux cycles d'utilisation). Une telle analyse permet également de quantifier les performances des matériaux, ce qui est particulièrement utile dans le domaine du stockage de l'énergie (batteries) ou du recyclage et de la valorisation des matières premières.

L'analyse élémentaire locale par microstructure est réalisée par des techniques d'analyse de surface, qui permettent de caractériser des matériaux qui ne sont pas forcément organisés de manière structurale, tels que les matériaux amorphes.

Cependant, les techniques d'analyse de surface des matériaux contenant du lithium sont un vrai challenge pour la mesure du lithium, car il s'agit d'un élément ultra léger dont la signature élémentaire par la raie Li Kα est de très faible énergie (proche de 50 eV).

Des techniques d'analyse qualitative locale peuvent être utilisées telles que :
- la spectroscopie de perte en énergie des électrons (EELS) couplée aux observations de microscopie électronique en transmission ;
- le nano SIMS « Secondary-lon Mass Spectrometry », technique consistant à pulvériser les couches atomiques superficielles d'un échantillon solide en le bombardant par un faisceau d'ions, puis à mesurer les « ions secondaires » émis par un spectromètre de masse ;
- la technique XPS par l'analyse d'électron Auger ;
- l'analyse par spectroscopie Raman.

Toutefois, ces techniques sont des méthodes d'analyse qualitatives ou semi-quantitatives et ne permettent pas d'accéder à une mesure quantitative de précision, notamment sur des microstructures locales pouvant être hétérogènes (document **[1]).**

Des techniques de spectrométrie en microanalyse X peuvent également être utilisées.

On peut par exemple utiliser la spectrométrie EDS équipée de détecteurs spécifiques sans fenêtres de séparation (document **[2]).** Cette technique d'analyse par spectrométrie permet de détecter l'élément lithium dans une matrice échantillon. Toutefois, cette technique souffre d'une très faible résolution spectrale et elle ne pourra pas réaliser la détection du lithium dans le cas de matériaux contenant certains éléments tels que Al, Fe, Co, Ni, Cu, Zn, Si, en raison du recouvrement spectral de leurs raies d'émission avec celle du lithium (document **[3]).**

Une autre technique de microanalyse X utilisant des spectromètres à réseaux gravés (SXES) permet de détecter le lithium avec une bonne résolution. Toutefois l'appareil est très couteux et aucune mesure quantitative n'a été réalisée à ce jour.

L'article de X.Llovet et al; « Electron probe microanalysis : a review of recent developments and applications in materials science and engineering », Progress in Materials Science, vol. 116, article numéro 100673, 25 mai 2020, pages 1-90, décrit des aspects de la microanalyse à l'aide d'une sonde à électrons (EPMA), également appelée microsonde de Castaing.

### EXPOSÉ DE L'INVENTION

Comme précisé précédemment, les inventeurs ont cherché comment obtenir une mesure locale, quantitative et de précision (c'est-à-dire de l'ordre de 0,5 % massique élémentaire) du lithium.

Ce but est atteint grâce à une microsonde WDS optimisée pour une détection de lithium dans un échantillon, la microsonde WDS comprenant une microsonde de Castaing couplée à un spectromètre WDS, l'échantillon, inclus dans une enceinte de la microsonde de Castaing, étant destiné à être bombardé par un faisceau d'électrons, pour émettre des photons X, qui sont destinés à être diffractés par un cristal monochromateur inclus dans le spectromètre WDS, des rayons X diffractés pénétrant dans un compteur proportionnel, et un spectre WDS étant obtenu, la microsonde WDS étant caractérisée en ce que :
- le cristal monochromateur du spectromètre WDS est un pseudo cristal multicouche ayant un domaine spectral incluant les longueurs d'onde d'émission du lithium sous sa forme métal et sous au moins l'une de ses formes oxydes, le pseudo cristal multicouche étant un empilement de n ensembles de quatre couches, n étant un nombre entier compris entre 20 et 30, déposés sur un substrat, les quatre couches formant une période d'empilement d de 19,7 nm, les quatre couches étant respectivement une couche de silicium pur, une couche de bore pur, une couche de carbure de bore, une couche de carbure de silicium ;
- une première fenêtre de séparation est disposée à une interface entre le spectromètre WDS et l'enceinte de la microsonde de Castaing ;
- une deuxième fenêtre de séparation est disposée à une entrée du compteur proportionnel, les rayons X diffractés traversant cette deuxième fenêtre de séparation en pénétrant dans le compteur proportionnel ;
- chacune des première et deuxième fenêtres de séparation étant un film en nitrure de silicium, d'une épaisseur comprise entre 18 nm et 22 nm ;
- chaque film en nitrure de silicium étant supporté par une grille en silicium polycristallin, d'une épaisseur comprise entre 7,5 µm et 8,5 µm, déposée sur l'une des deux faces du film en nitrure de silicium ;
- le film en nitrure de silicium de la deuxième fenêtre de séparation comprenant en outre un film en aluminium, d'une épaisseur comprise entre 1 nm et 2 nm, déposée sur l'autre des deux faces du film en nitrure de silicium ;
- lorsque l'échantillon est bombardé par le faisceau d'électrons, le spectromètre WDS est destiné à être maintenu sous une pression inférieure à 9,1.10⁻¹ Pa et l'enceinte de la microsonde de Castaing est destinée à être maintenue sous une pression comprise entre 9,3.10⁻⁵ Pa et 2,5.10⁻⁵ Pa ;
- un moyen pour protéger la première fenêtre de séparation d'une surpression ou d'une sous pression lors de l'introduction ou le retrait de l'échantillon dans l'enceinte de la microsonde de Castaing.

Selon l'invention, le pseudo cristal multicouche est un empilement d'un ensemble de couches qui sont répétées selon une période d'empilement d qui est choisie pour correspondre à la gamme de longueur d'onde réfléchie à analyser. Dans notre cas, on cherche à obtenir une bonne réflexion de la raie Li Kα et à analyser la gamme spectrale allant de 0,038 keV à 0,120 keV.

Dans le cadre de l'invention, une grille est un élément plan (par exemple une couche en silicium) muni d'une pluralité de trous qui sont traversant dans le sens de l'épaisseur de la grille, de préférence disposés à égales distances les uns des autres. Dans les première et deuxième fenêtres de séparation, la grille sert de support mécanique au film mince de nitrure de silicium, tout en laissant passer le faisceau (le faisceau va passer par les trous de la grille).

La couche d'aluminium a pour but de provoquer une charge négative sur la surface de la deuxième fenêtre de séparation et d'améliorer considérablement la collecte de charge. Le film mince est destiné à être situé du côté où arrive le faisceau de rayons X (donc côté spectromètre).

Dans le présent exposé, l'expression « compris entre ... et ... » doit être comprise comme incluant les bornes.

Avantageusement, chaque grille est munie d'une pluralité de trous ayant une dimension comprise entre 0,323 mm et 0,343 mm, les trous ayant de préférence une section droite de forme hexagonale. La forme hexagonale est une forme préférée, mais les trous pourraient tout à fait avoir une section droite de forme circulaire.

La microsonde WDS optimisée selon l'invention permet la détection du lithium avec un spectromètre WDS dans différents matériaux par analyse locale sur des microstructures pouvant être homogènes ou hétérogènes à l'échelle du µm.

Selon une variante de l'invention, le moyen pour protéger la première fenêtre de séparation d'une surpression ou d'une sous pression est une vanne de réduction automatique du flux, qui est placée en amont d'un système de pompage primaire de la microsonde électronique de Castaing. Cette vanne de réduction automatique du flux peut être placée entre deux brides ISO KF.

L'invention concerne également un procédé de détection du lithium dans un échantillon à l'aide d'une microsonde WDS optimisée telle que décrite ci-dessus. Le procédé comprend :
- une mise en place de l'échantillon dans la microsonde WDS ;
- une application d'une pression inférieure à 9,1.10⁻¹ Pa dans le spectromètre WDS et d'une pression comprise entre 9,3.10⁻⁵ Pa et 2,5.10⁻⁵ Pa dans l'enceinte de la microsonde de Castaing ;
- un bombardement d'une zone de l'échantillon avec un faisceau d'électrons, de manière à ce qu'il émette des rayons X;
- une diffraction des rayons X par le cristal monochromateur ;
- un comptage des rayons X diffractés pénétrant dans le compteur proportionnel ;
- une obtention d'un spectre WDS de l'échantillon ;
- si l'échantillon comporte du lithium dans la zone bombardée, une détection du lithium par identification d'une ou plusieurs raies d'émission du lithium dans le spectre WDS obtenu.

On précise qu'on peut identifier une ou plusieurs raies d'émission du lithium, car le lithium peut être sous sa forme métal et/ou sous sa forme oxyde.

La détection des déplacements en énergie de la raie d'émission du lithium dans le spectre WDS donne de l'information sur l'état chimique du lithium et sa spéciation (métal, oxyde) avec une bonne résolution.

De préférence, le faisceau d'électrons est obtenu par application d'une tension d'accélération de 5 kV et d'un courant de 700 nA.

Selon une variante de l'invention, le procédé comprend en outre, pour chaque raie d'émission du lithium identifiée :
- une soustraction d'un bruit de fond et un ajustement par une fonction Pseudo-Voigt, pour calculer une intensité de ladite raie d'émission du lithium identifiée;
- un calcul d'un facteur de forme de ladite raie d'émission du lithium identifiée en prenant comme référence une intensité de la raie d'émission du lithium sous forme métal ;
- une comparaison du facteur de forme calculé avec des facteurs de forme attribués respectivement à une raie d'émission du lithium sous forme métal et à une ou plusieurs raies d'émission du lithium sous une forme oxyde ;
- une détermination du facteur de forme attribué qui est le plus proche du facteur de forme calculé, moyennant quoi on déduit si le lithium détecté est sous forme métal ou sous forme oxyde.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 représente un schéma simplifié en coupe d'une microsonde de Castaing équipée d'un spectromètre WDS, l'ensemble étant également appelé « microsonde WDS » ;
- la figure 2 représente un exemple d'une structure multicouche d'un matériau faiblement absorbant A et d'un matériau d'absorption élevée B ;
- la figure 3 représente un exemple d'une structure multicouche formée de la répétition d'un empilement de quatre couches de matériaux d'absorptions différentes A, B, C, D ;
- la figure 4 représente un exemple d'une grille 23 à placer sur la première fenêtre de séparation ;
- la figure 5 est une comparaison des spectres WDS de la raie Al_{II,III} acquis avec un spectromètre WDS, muni d'un cristal multicouche développé pour les X mous et de fenêtres de séparation épaisses (courbe 1 (pas l'invention)) ou ultra-minces (courbe 2 (selon l'invention)) ;
- la figure 6 est un spectre WDS réalisé sur un échantillon LiF à l'aide d'une microsonde de Castaing et d'un spectromètre WDS optimisé selon l'invention permettant une identification de la spéciation du lithium avec l'émission de Li métal et Li oxyde ;
- la figure 7 est une comparaison de spectres WDS de la raie du Li oxyde acquis avec un spectromètre WDS optimisé selon l'invention, pour différentes valeurs de courant du faisceau électronique de la microsonde de Castaing ;
- la figure 8 montre des spectres WDS avec les principales raies M et L d'éléments sélectionnés parmi Al, Si, Co, Ni, Cu, Zn, Fe, dans le domaine spectral de 0,038 keV à 0,120 keV, obtenus avec un spectromètre WDS optimisé selon l'invention ;
- la figure 9 est une image électronique d'un quasi cristal présentant notamment des phases d'Al₅Li₃Cu, d'Al₂LiCu et d'Al pur;
- la figure 10 est un spectre WDS de la phase Al₅Li₃Cu du quasi cristal de la figure 9, obtenu avec un spectromètre WDS optimisé selon l'invention ;
- la figure 11 est une comparaison des spectres WDS des phases mesurées Al₅Li₃Cu, Al₂LiCu et Al pur du quasi cristal de la figure 9, obtenu avec un spectromètre WDS optimisé selon l'invention ;
- la figure 12 est un spectre WDS acquis sur un échantillon LiF à l'aide d'un spectromètre WDS optimisé selon l'invention, avec un ajustement des raies d'émission de Li métal et Li oxyde par une fonction Pseudo-Voigt après soustraction du fond continu ;
- la figure 13 est un spectre WDS acquis sur la phase Al₅Li₃Cu du quasi cristal de la figure 9 à l'aide d'un spectromètre WDS optimisé selon l'invention, avec un ajustement de la raie Li Kα par une fonction Pseudo-Voigt après soustraction du fond continu.

### EXPOSÉ DÉTAILLÉ DE MODES DE RÉALISATION PARTICULIERS

Grâce à l'invention, on peut détecter le lithium par analyse locale dans les matériaux dont la matrice élémentaire peut être organisée de manière structurale ou être non organisée (amorphe). La détection peut ainsi être effectuée sur des matériaux présentant des microstructures qui sont homogènes ou hétérogènes à l'échelle du micromètre.

L'invention permet une mesure locale, quantitative et de précision du lithium.

La méthode présentée selon l'invention est réalisée à partir d'une microsonde de Castaing (ou EPMA pour « Electron Probe Micro Analysis » en anglais) et à partir de l'optimisation d'un spectromètre par dispersion en longueur d'onde (WDS).

Cette optimisation comprend, entre autres, la mise en place d'un pseudo cristal multicouche spécifiquement adapté pour la réflexion des photons dans le domaine spectral des très faibles énergies (c'est-à-dire de quelques dizaines d'eV (dans notre cas 38 à 120 eV)), dont l'émission des photons caractéristiques du lithium, ainsi que des fenêtres de séparation spécifiques faiblement absorbantes.

L'utilité de la microanalyse X réside dans la possibilité de mener une analyse locale et non destructive, et qui peut être qualitative ou quantitative. Le but de l'analyse quantitative est d'obtenir la concentration *C_{A}* de chaque élément A présent dans un échantillon inconnu à partir des rapports entre l'intensité d'une raie caractéristique émise par l'élément A dans l'échantillon à analyser et l'intensité émise par le même élément dans un témoin dont la stœchiométrie est connue *α priori.* Ce rapport d'intensité relative noté k-ratio ou première approximation de Castaing est ensuite corrigé des effets de matrice par les modèles conventionnels tels que la méthode ZAF ou la méthode φ(ρz) qui est en général mieux adapté à l'analyse des éléments légers.

### Principe de l'analyse par spectrométrie WDS

La microsonde WDS est une microsonde de Castaing, qui est couplée à un spectromètre WDS ; la microsonde WDS utilise la technique de spectrométrie par dispersion de longueur d'onde (WDS) de rayons X issus d'un échantillon sous bombardement électronique, afin d'identifier la concentration des éléments présents dans l'échantillon.

Lorsqu'un faisceau d'électrons bombarde un échantillon, il se produit dans la matière une diversité d'interactions entre les électrons et les atomes de l'échantillon qui conduisent, entre autres, à l'émission de rayons X. Les rayons X (ou photons X) ainsi émis sont dits de type caractéristiques quand leur émission est provoquée par une ionisation de l'atome cible, suivie par sa désexcitation.

La désexcitation de l'atome est régie par des lois probabilistes de relaxation atomique. Comme les photons caractéristiques issus des transitions électroniques ont une énergie spécifique, il est donc possible de les affecter à un élément du tableau de Mendeleïev. L'identification de chaque élément présent dans l'échantillon s'effectue donc par la mesure de l'énergie (EDS) ou de la longueur d'onde (WDS) des photons caractéristiques qui sont collectés par le détecteur, pour afficher un spectre d'intensité du flux photonique en fonction de l'énergie ou de la longueur d'onde (WDS).

L'énergie E et la longueur d'onde λ sont par la suite utilisées d'une façon interchangeable avec *E=hc*/ *λ,* où h= 6,62×10⁻³⁴ J.s (constante de Planck).

Le spectre des rayons X mesuré contient également un signal de fond constitué majoritairement du rayonnement de Bremsstrahlung, qui provient du freinage des électrons incidents par le champ moyen des noyaux de l'atome cible et qui dépend du nombre atomique moyen de l'échantillon. Le rayonnement de Bremsstrahlung peut également donner des informations supplémentaires sur la composition élémentaire de l'échantillon.

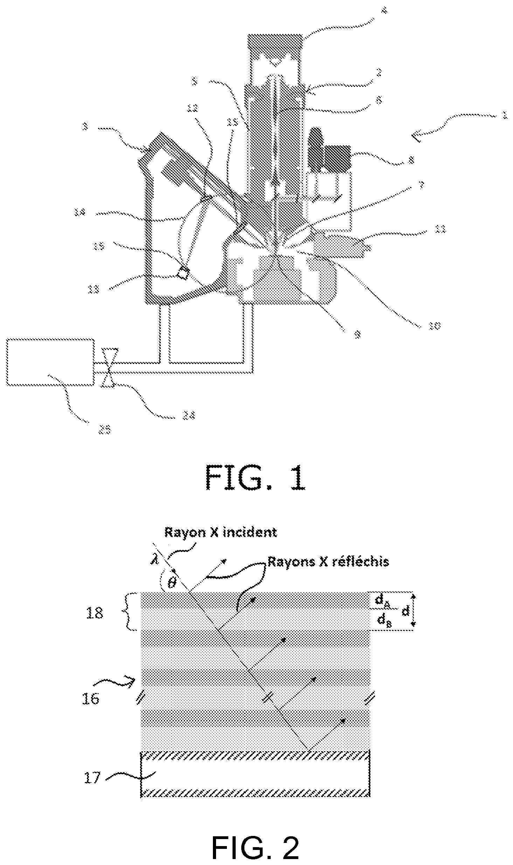

De manière connue et comme illustré dans la figure 1, une microsonde WDS 1 comporte une microsonde de Castaing 2 et un spectromètre WDS 3.

La microsonde de Castaing 2 comporte un canon à électrons 4, une colonne électronique 5 qui sert à focaliser le faisceau 6 issu du canon, un dispositif de balayage du faisceau 7, ainsi qu'un microscope optique 8 pour visualiser l'échantillon 9 ; une enceinte 10 (également appelée chambre d'analyse ou chambre de mouvement objet) prolongée par un sas d'introduction 11 permettant d'introduire l'échantillon dans l'enceinte.

Le spectromètre WDS 3 comporte un cristal monochromateur 12, un compteur proportionnel 13 et une chaine de comptage monocanal (non représentée).

Les électrons issus d'un filament sont accélérés dans le canon à électrons ; le faisceau d'électrons est ensuite aligné et focalisé dans la colonne électronique qui est sous vide ; le faisceau 6 bombarde l'échantillon 9 qui émet alors du rayonnement X ; le rayonnement arrivant sur le cristal monochromateur 12 est diffracté et discriminé; le compteur proportionnel 13 et la chaine de comptage se chargent du dénombrement des rayons X.

Le cristal monochromateur choisi doit avoir un grand pouvoir de résolution spectrale pour pouvoir séparer des raies proches, une bonne réflectivité, un rapport signal/fond élevé pour détecter les pics de très faible intensité, ainsi qu'une bonne stabilité mécanique et chimique.

Pour les éléments lourds, le rayonnement X est diffracté de manière sélective par un cristal monochromateur de distance interréticulaire d connue. Mais il n'existe pas de cristal naturel avec une distance interréticulaire assez grande pour pouvoir analyser le domaine des rayons X mous (émis par les éléments légers), c'est pourquoi des cristaux synthétiques (ou pseudo cristaux), dits multicouches, ont été créés en empilant des couches d'un matériau lourd diffractant et d'un matériau léger selon une périodicité *d (ou période d'empilement).*

La figure 2 montre le schéma d'un tel cristal multicouche 16 déposé sur un substrat 17 et ayant une structure multicouche à couches alternées, formée de l'empilement périodique de n ensembles 18 (n étant un entier supérieur ou égal à 2), chaque ensemble étant constitué d'une couche 19 de matériau A ayant un coefficient d'absorption faible, et d'une couche 20 de matériau B ayant un coefficient d'absorption élevée, les deux couches étant d'épaisseurs respectives d_{A} et d_{B} et l'ensemble ayant une épaisseur d.

Le cristal monochromateur est courbé (non représenté) d'une façon à ce que le rayonnement, qui est émis divergent par l'échantillon, arrive sous un même angle sur le cristal. Il est placé, avec le compteur proportionnel 13 et l'échantillon 9, sur un cercle de focalisation 14, appelé cercle de Rowland. La sélection de la raie analysée se fait alors par rotation du cristal monochromateur ou par translation du cristal monochromateur et du compteur proportionnel pour garder l'ensemble sur le cercle de Rowland en permanence.

Dans les essais réalisés pour illustrer l'invention, le rayon du cercle de Rowland utilisé est de 160 mm avec l'utilisation d'un spectromètre WDS du fournisseur CAMECA.

### Éléments apportés pour l'optimisation de la microsonde WDS pour la détection du lithium

### Cristal monochromateur

Le cristal monochromateur utilisé dans le cadre de la présente invention est un cristal synthétique multicouche courbé, appelé aussi pseudo cristal, spécifiquement adapté pour la réflexion des photons dans le domaine spectral des très faibles énergies, dont l'émission des photons caractéristiques du lithium.

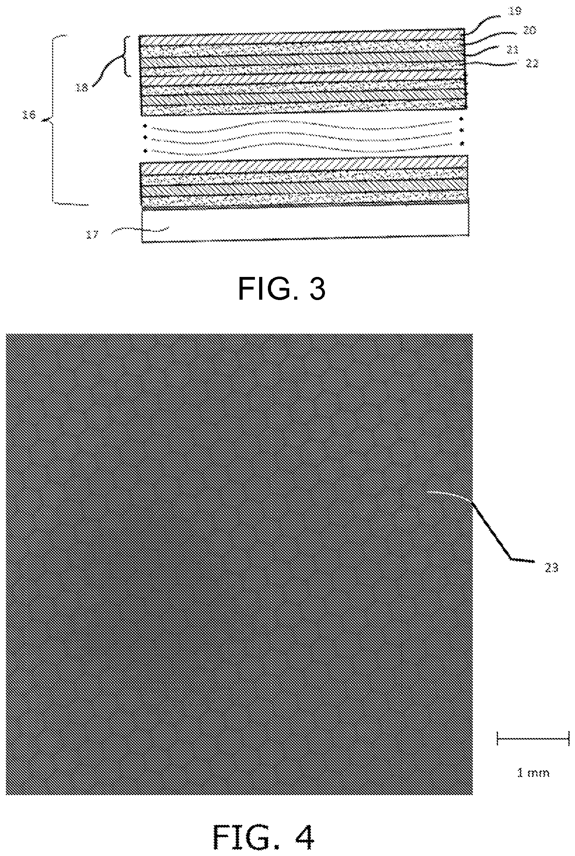

Selon un exemple de réalisation de l'invention illustré dans la figure 3, le pseudo cristal multicouche 16 est constitué d'un ensemble 18 de quatre couches 19, 20, 21, 22 de matériaux lourds et de matériaux légers disposés alternativement sur un substrat 17 (par exemple un substrat plan d'un monocristal de silicium ; de préférence, le substrat choisi doit être très peu rugueux et les paramètres cristallins doivent être adaptés à ceux des matériaux déposés pour ne pas créer des contraintes et des défauts), formant une période d'empilement d de 197 angströms, chaque ensemble étant empilé n fois, n étant un nombre entier compris entre 20 et 30. Les quatre couches sont respectivement : une couche de silicium pur, une couche de bore pur, une couche de carbure de bore, une couche de carbure de silicium.

L'épaisseur de chaque couche de l'ensemble joue sur les propriétés de réflectivité qui sont au préalable simulées et déterminées par des calculs complexes.

Pour la réflexion des photons caractéristiques émis par le lithium, il faudrait en théorie que le pseudo cristal multicouche ait une période d'empilement de 25 nm. En pratique, il faut trouver un compromis entre cette valeur théorique pour la réflexion du signal venant du Li et les autres éléments d'intérêts dans la gamme énergétique. Comme dit plus haut, la période d'empilement doit à peu près correspondre à la gamme de longueurs d'onde réfléchies qu'on souhaite analyser.

En choisissant un pseudo cristal multicouche ayant une période de 19,7 nm, cela permet de réfléchir les longueurs d'onde de 10,3 nm (120 eV) jusqu'à 32,6 nm (38 eV). Ces valeurs sont un compromis entre des contraintes données par la distance d'empilement du multicouche et par les angles de Bragg qui sont permis par le dispositif de la µl-sonde WDS optimisée selon l'invention.

En utilisant deux couches de matériaux faiblement absorbant Si et B positionnées sur deux couches de matériaux plus absorbants de B₄C et de SiC, le domaine spectral d'analyse obtenu avec ce cristal permet de mesurer une gamme allant de 0,038 keV à 0,120 keV.

### Pression

Le spectromètre WDS est maintenu sous vide primaire (c'est-à-dire une pression inférieure à 9,1.10⁻¹ Pa) et on y applique une faible pression (par exemple 1 bar) ; le niveau de vide dans le spectromètre est moins élevé que celui de l'enceinte 10 de la microsonde qui reçoit l'échantillon, où il règne un vide secondaire (c'est-à-dire une pression comprise entre 9,3.10⁻⁵ Pa et 2,5.10⁻⁵ Pa (par exemple 4,5.10⁻⁵ Pa).

### Fenêtres de séparation

De manière connue et en fonction de la pression établie dans le spectromètre WDS, des fenêtres de séparation 15 peuvent être disposés dans le spectromètre WDS, une fenêtre étant disposée au niveau de l'interface entre le spectromètre 3 et l'enceinte 10 (recevant l'échantillon à mesurer) de la microsonde, et une autre fenêtre étant disposée à l'entrée du compteur proportionnel 15 (détecteur à flux gazeux) qui dénombre les photons caractéristiques.

Ces fenêtres de séparation de l'art antérieur sont constituées par différents types de matériaux, comme par exemple en mylar^{™}, ou en membrane de polypropylène, et elles ont une épaisseur de l'ordre de la centaine de nanomètres (typiquement 200 nm).

Dans le cadre de la présente invention, chacune des fenêtres de séparation 15 est un film en nitrure de silicium d'une épaisseur d'environ 20 nm (à plus ou moins 2 nm près).

La fenêtre de séparation disposée au niveau de l'interface entre le spectromètre 3 et l'enceinte 10 est constituée d'un film mince de nitrure de silicium (de préférence Si₃N₄) et afin de renforcer la résistance mécanique du film mince à la pression régnant dans le spectromètre WDS et dans l'enceinte, le film mince est déposé sur une grille en silicium polycristallin. La grille est positionnée face à l'enceinte 10.

La fenêtre de séparation disposée à l'entrée du compteur proportionnel est un film mince de nitrure de silicium (de préférence SiN), qui est recouvert d'une couche d'aluminium, d'une épaisseur comprise entre 1 et 2 nm. La couche d'aluminium a pour but de provoquer une charge négative sur la surface de la couche de nitrure de silicium et d'améliorer considérablement la collecte de charge. La couche d'aluminium est disposée sur l'une des deux faces opposées du film de nitrure de silicium et sur l'autre des deux faces du film est disposée une grille en silicium polycristallin. La grille est positionnée face au compteur proportionnel 15.

Les grilles utilisées dans les deux fenêtres sont en silicium polycristallin, ont une épaisseur comprise entre 7,5 µm et 8,5 µm ; il peut s'agir d'un film d'une épaisseur de 8 µm (à plus ou moins 0,5 µm près) muni de trous traversants d'un diamètre compris entre 0,323 mm et 0,343 mm, disposés à équidistance les uns des autres. De préférence, la section droite de ces trous a une forme hexagonale. Comme illustré dans la figure 4, les trous peuvent être disposés proches les uns des autres de sorte que la grille sera constituée par les branches 23 d'hexagones disposés adjacents les uns aux autres, une même branche étant commune à deux hexagones.

Ces fenêtres de séparation selon l'invention sont moins absorbantes dans la gamme des très faibles énergies et permettent la détection de davantage de photons ; elles permettent donc la détection d'une intensité supérieure.

### Vanne de réduction automatique de flux

Afin de protéger les fenêtres de séparation des variations de pression pouvant intervenir lors des entrées et sorties des échantillons dans l'enceinte 10, une vanne de réduction automatique du flux 24 a été placée en amont du système de pompage primaire 25 entre deux brides ISO KF, de manière à ce que les clapets de la vanne, lorsqu'ils sont ouverts, soient orientés vers la conduite à vide contre le flux de gaz ; la vanne va permettre de réduire automatiquement la pression en cas de changement de pression. Il peut par exemple s'agir d'une vanne à clapets d'étranglement, par exemple le modèle VAT série 31 du constructeur VAT.

### Fonctionnement du spectromètre WDS

Une partie des photons diffractés dont la longueur d'onde vérifie la relation de Bragg sont détectés par le compteur proportionnel, qui est un détecteur à flux gazeux. De manière connue, ce type de détecteur est constitué d'une enceinte traversée par un flux gazeux (mélange de gaz rares et d'un gaz polyatomique) ; l'enceinte comporte en son centre une anode avec une tension de polarisation élevée (environ 1500 V à 2500 V) et comporte une fenêtre d'entrée, par laquelle les photons X vont pénétrer dans l'enceinte. Dans le cadre de la présente invention, le gaz utilisé est un mélange argon/méthane.

Le photon X pénètre dans l'enceinte du détecteur par la fenêtre d'entrée et est absorbé par un atome du gaz qui s'ionise et qui libère un photoélectron. Cet électron est alors accéléré par le champ électrique important régnant dans le détecteur et va, à son tour, créer des ionisations secondaires qui libèrent d'autres électrons par une succession de chocs inélastiques avec d'autres atomes du gaz. La charge électrique totale provoquée par ce phénomène d'avalanche dans le détecteur s'accumule sur l'anode et entraîne une variation de la tension de polarisation. La charge est ensuite éliminée par une résistance selon les lois classiques de décharge exponentielle d'un condensateur. Un photon X crée ainsi une impulsion électrique.

Le détecteur est un compteur qui opère en régime proportionnel, c'est-à-dire que l'augmentation de la tension de polarisation implique une augmentation du nombre d'électrons secondaires créé. Le signal de sortie du détecteur est donc proportionnel à l'énergie du photon incident.

À la sortie du détecteur, il y a une chaine de comptage monocanal, qui comporte un préamplificateur, un amplificateur et un analyseur monocanal.

Le préamplificateur transforme la variation de charge en variation de courant. Le signal a l'allure d'une gaussienne de quelques mV d'amplitude. L'amplificateur va amplifier ce signal pour qu'il atteigne quelques volts.

Comme le cristal monochromateur (multicouche), orienté en incidence de Bragg pour un rayonnement λ₀, peut diffracter les ordres multiples de longueur d'onde 2*λ₀ ou 3*λ₀, l'analyseur monocanal (PHA) est chargé de séparer les impulsions significatives de celles provenant du fond ou des ordres multiples. Les impulsions significatives, qui ont pour origine les raies X caractéristiques, sont les plus probables et se retrouvent au centre de la gaussienne. Les impulsions issues des ordres multiples des raies ou du bruit de fond sont moins probables et sont essentiellement présentes sur les bords de la gaussienne.

En choisissant des valeurs de seuil haut et bas sur l'impulsion créée par le rayonnement X, on élimine les signaux dont la hauteur est extérieure à la bande d'énergie délimitée par les deux seuils.

Plusieurs modes de détection peuvent être employés pour détecter et amplifier l'intensité et paramétrer le PHA (réglage intégral, réglage automatique, réglage en mode manuel autour de la bande d'énergie de l'intensité détectée).

Quand l'ensemble de la chaîne de comptage monocanal est occupé, aucune autre information ne peut être traitée et il apparaît un temps mort. Pour un taux de comptage élevé, la perte d'information peut être importante. Le temps mort de l'électronique est constant (quelques centaines de nanosecondes), mais il est extensible pour le détecteur (compteur).

Afin de pouvoir apporter une correction pour les forts taux de comptage, il faut s'assurer que le temps mort soit constant et d'une valeur connue. Il est donc utile d'introduire volontairement un temps mort électronique constant supérieur (quelques microsecondes).

Dans le cadre de la présente invention, nous avons utilisé un mode d'ouverture du PHA intégral afin de permettre la détection d'une gamme d'énergie de photons large.

Les valeurs de réglages du détecteur et de la chaine de comptage monocanal sont les suivantes :
- alimentation du détecteur : 1480 V ;
- gain d'amplification : 3000 ;
- temps mort : 3 µs ;
- ligne de base du PHA : 826 mV ;
- bande de passage des impulsions d'énergie mesurées : 4174 mV.

À la fin d'une analyse, la chaine de comptage monocanal délivre un spectre constitué du fond continu et de raies caractéristiques.

La forme naturelle d'une raie qui provient de la transition entre deux niveaux de cœur d'un atome est la convolution des densités d'états (DOS) électroniques de ces niveaux. Les deux DOS ont une forme lorentzienne selon l'équation (1) suivante : $L \left(E\right) = \frac{H}{1 + \frac{E - {E}_{0}}{\frac{γ}{2}}}$ avec H l'amplitude de la raie, E₀ son énergie centrale (également appelée énergie caractéristique) et y la largeur à mi-hauteur (FWHM).

La forme résultante d'une raie atomique est donc lorentzienne et son énergie caractéristique augmente avec l'énergie de liaison des électrons éjectés et donc avec le numéro atomique de la cible.

L'équation (1) n'est néanmoins pas correcte pour les émissions Kα des éléments légers, car les transitions impliquent des électrons de valence. La forme de la bande d'émission d'un élément léger, comme le lithium, est une convolution d'une lorentzienne et de la DOS de la bande de valence, qui a une largeur typique de quelques eV et qui est très sensible à l'état chimique du matériau.

La fonction de réponse du spectromètre a une forme gaussienne selon l'équation (2) suivante : $F \left(E\right) = H exp \left[-ln2\times {\left(\frac{E - {E}_{0}}{\frac{Γ}{2}}\right)}^{2}\right]$ avec Γ la FWHM.

La forme finale de la raie détectée est une convolution de ces distributions, même si l'élargissement du spectromètre est prépondérant pour la microsonde WDS optimisée selon l'invention.

Il convient dans ce cas de décrire la forme de la raie détectée par une fonction de Voigt.

Une approximation plus facile est valable pour ajuster la forme d'une raie d'émission mesuré par une microsonde WDS avec un cristal monochromateur multicouches est l'expression linéaire dite Pseudo-Voigt (équation (3)) : $P \left(E\right) = H \left[\left(1-k\right)exp\left(-ln2\times {\left(\frac{E - {E}_{0}}{\frac{Γ}{2}}\right)}^{2}\right)+\frac{k}{1 + {\left(\frac{E - {E}_{0}}{\frac{Γ}{2}}\right)}^{2}}\right]$ avec un facteur de pondération *k* entre la contribution gaussienne et la contribution lorentzienne (k=1 pour une forme pure lorentzienne et k=0 pour une forme pure gaussienne).

De plus, la forme des raies caractéristiques peut être modifiée par la superposition de pics satellites (issus de phénomènes d'ionisation multiples) ou par la superposition d'autres raies d'émission à la raie analysée (raies de transitions d'autres éléments dans la cible et leurs raies d'émission d'ordre multiple).

Compte tenu de la bonne résolution spectrale d'un WDS, ce phénomène est d'autant plus visible.

Au final, l'intensité intégrale I des photons X collectés par le spectromètre et perçue par le détecteur permet de déterminer la concentration *C_{A}* de l'élément *A* dans l'échantillon selon l'équation (4) suivante : ${I}_{A}^{i} \left(E\right) = {C}_{A} \frac{{N}_{A}}{{M}_{A}} {n}_{e} - {σ}_{i}^{Total} \left(E\right) {ω}_{i} \frac{{Γ}_{ij}}{{Γ}_{iTot}} \left(1+{f}_{r}\right) \left(\begin{matrix}1 \\ + {f}_{c}\end{matrix}\right) \int ϕ \left(ρz\right) {e}^{- \frac{μ}{ρ} \frac{1}{cos \left(θ\right)} ρz} d \left(ρz\right) \frac{Ω}{4 π} ε \left({E}_{ph}\right)$
- *Iⁱ_{A}*(*E*) étant l'intensité du rayonnement X détecté correspondant à la raie caractéristique *i* à l'énergie E, de l'élément A et exprimée en coups/s ;
- *C_{A}* étant la concentration massique de l'élément A au sein de l'échantillon ;
- N_{A} étant le nombre d'Avogadro ;
- M_{A} étant la masse atomique de l'élément A ;
- *nₑ-* étant le nombre d'électrons incidents par unité de temps;
- ${σ}_{i}^{Total} \left(E\right) {ω}_{i} \frac{{Γ}_{ij}}{{Γ}_{iTot}}$ étant égal à *σᵢⱼ*(*E*) , qui correspond à la section efficace de production de la raie *i-j*; c'est la somme de toutes les probabilités qui conduisent à une lacune électronique sur la sous-couche *i* suivi d'une désexcitation par une transition radiative entre les sous-couches *j* et *i*, en fonction de l'énergie ;
- $\int ϕ \left(ρz\right) {e}^{- \frac{μ}{ρ} \frac{1}{cos \left(θ\right)} ρz} d \left(ρz\right)$ étant la distribution en profondeur du rayonnement X émis, pondéré du coefficient d'atténuation ;
- *fr* et *fc* étant respectivement les contributions des autres raies caractéristiques et du fond continu à la fluorescence ;
- $\frac{Ω}{4 π}$ étant la probabilité pour que le rayonnement X atteigne le détecteur, l'émission étant supposée isotrope (ce terme étant appelé efficacité géométrique du détecteur et représentant la fraction d'angle solide couverte par le détecteur) ;
- *ε*(*Eₚₕ*) étant la probabilité pour que les rayons X, d'énergie *Eₚₕ,* arrivant sur le détecteur soient effectivement détectés (ce terme étant appelé efficacité intrinsèque et variant en fonction de l'énergie du photon mesuré).

Les nombreux paramètres de l'équation (4) rendent sa résolution très difficile. Afin de simplifier sa résolution, un calcul consiste à comparer l'intensité d'une raie d'un élément de l'échantillon (*I^{ech}*) par rapport à une raie d'un témoin pur ou alors de composition connue avec une intensité relative (*I^{tem}*). Cette méthode est appelée le « k-ratio », ou encore « concentration apparente » (équation (5)) : ${k}_{A} = \frac{{I}^{ech}}{{I}^{tem}} = \frac{{C}_{A}^{ech}}{{C}_{A}^{tem}} \frac{{\left[{\int }_{0}^{∞} ϕ \left(ρz\right) exp \left(-χρz\right) dρz\right]}_{ech}}{{\left[{\int }_{0}^{∞} ϕ \left(ρz\right) exp \left(-χρz\right) dρz\right]}_{tem}} \frac{{\left(1+{f}_{FC}\right)}_{ech}}{{\left(1+{f}_{FC}\right)}_{tem}} \frac{{\left(1+{f}_{r}\right)}_{ech}}{{\left(1+{f}_{r}\right)}_{tem}}$
- *φ*(*ρz*) étant la densité d'ionisation en profondeur du rayonnement X;
- *ρz* étant la profondeur volumique ;
- *f_{FC}* étant l'émission secondaire par le fond continu;
- *fᵣ* étant l'émission secondaire par les raies caractéristiques.

Avec cette équation (5), les concentrations des éléments de l'échantillon sont obtenues grâce à des calculs de correction de matrice.

La première étape consiste à extraire l'intensité caractéristique dans le spectre acquis. Pour cela, la contribution du fond continu est retirée sous les pics d'intensité caractéristiques.

La méthode du « k-ratio » permet de calculer la concentration apparente de l'échantillon à l'aide d'un standard pur (il s'agit d'un échantillon témoin ou de référence qui a une composition connue ; il peut s'agir d'un matériau contenant uniquement un seul élément chimique) mesuré dans les mêmes conditions d'analyse.

La seconde étape consiste à calculer la composition de l'échantillon par correction des effets de matrice. On distingue entre le modèle φ(ρz), qui est basé sur la description de la distribution ρ des rayons X en profondeur z dans l'échantillon, et le modèle ZAF qui prend en compte la production d'ionisation primaire due aux numéros atomiques [Z], l'absorption des rayonnements dans la cible [A] et les effets d'émission secondaire de fluorescence [F].

Les facteurs Z, A et F peuvent être calculés à partir de formules semi-empiriques en fonction de la composition du témoin, de la tension d'accélération, ainsi que de la composition apparente de l'échantillon. Chacun de ces facteurs doit être calculé pour un échantillon de composition définie et donc pour chaque élément. La concentration massique corrigée est alors calculée par itération successive jusqu'à convergence de l'équation.

### Optimisation de la détection du lithium

L'optimisation d'une microsonde WDS selon l'invention a notamment permis d'améliorer de manière significative la mesure de l'intensité des photons dans le domaine spectral du lithium, en particulier le domaine spectral de 0,038 keV à 0,120 keV avec l'utilisation du pseudo-cristal multicouche illustré dans la figure 3 (ensemble de quatre couches répétées (couche de silicium pur/couche de bore pur/couche de carbure de bore/couche de carbure de silicium)).

L'optimisation d'une microsonde WDS selon l'invention a été mise en œuvre sur la microsonde SXFive-TACTIS de la société CAMECA (qui est une microsonde de Castaing équipée de cinq spectromètres WDS et d'un canon électronique à émission de champ à cathode chaude (FEG)) pour réaliser des mesures de validation sur différents échantillons, mais peut être implantée sur toute autre microsonde de Castaing équipée d'un spectromètre WDS pouvant recevoir un pseudo cristal multicouche.

Une comparaison des spectres WDS acquis sur un échantillon d'aluminium pur, qui présente la raie AI L_{II,III} dans le domaine spectral du pseudo cristal multicouche utilisé, a été réalisée avant et après la mise en place des nouvelles fenêtres minces.

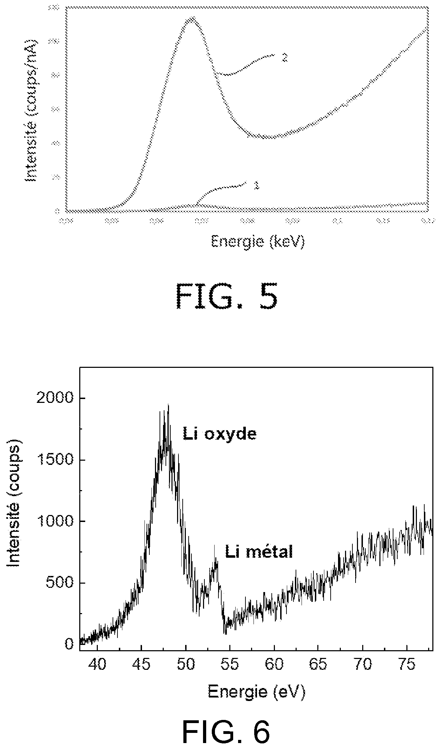

En référence à la figure 5, la comparaison des deux spectres WDS obtenus (courbe 1 : spectre obtenu avec des fenêtres épaisses et courbe 2 : spectre obtenu avec des fenêtres ultra-minces (20 nm)) permet de montrer une amélioration d'un facteur 30 de l'intensité mesurée en coups/nA.

Les fenêtres épaisses sont constituées par différents types de matériaux en mylar^{™} ou en membrane de polypropylène et elles ont une épaisseur de l'ordre de la centaine de nanomètres, typiquement 200 nm.).

Cette comparaison permet également de constater que, pour qu'il y ait une nette amélioration, il ne suffit pas d'utiliser un pseudo cristal adapté, mais que c'est bien la combinaison du pseudo cristal adapté, des fenêtres ultra-minces, de l'application des pressions primaire et secondaire, ainsi que de la mise en place de la vanne de régulation de flux (pour protéger les fenêtres ultra-minces des variations de pression brusques), qui permet d'obtenir cette amélioration.

### Réglages réalisés

Avant tout réglage pour une meilleure détection des photons caractéristiques du lithium, l'alignement du faisceau électronique a été optimisé.

Puis, on a appliqué une tension d'accélération du faisceau électronique de 5 kV et un courant de 700 nA.

Cette tension a été déterminée à l'aide de calculs théoriques réalisé par des simulations de *Monte Carlo* avec le logiciel Casino^{™} à différentes hautes tensions pour des échantillons contenant du Li.

Des travaux similaires ont été effectués (document [2]) pour des échantillons Li₂, LiH, Li₃N, Li₂O, Li₂S, LiF, LiCl. On observe que le maximum de l'intensité de la raie Li Kα simulée pour ces différents matériaux en fonction de la tension d'accélération apparaît pour une tension d'accélération inférieure à 5 kV pour la plupart des matériaux dont le LiF.

Pendant l'expérimentation sur le LiF, le maximum d'intensité a été atteint avec un réglage à 5 kV. Cette différence peut probablement s'expliquer par des effets de surface qui ne sont pas pris en compte lors des simulations parfaites.

Ces premiers résultats ont permis un meilleur réglage pour provoquer davantage de transitions radiatives qui contribuent à l'intensité détectée.

L'intensité du courant a été maximisée à 700 nA, afin d'améliorer le rendement de détection du Li et de pouvoir étudier la forme spectrale de son émission.

Le faisceau d'électrons a été focalisé et réglé avec une surface d'impact de 1 µm sur la surface d'un échantillon de LiF non métallisée et rendue conductrice par un dépôt à la peinture d'argent en contour de la zone d'observation.

Les spectres WDS acquis sur le matériau LiF avec une intensité de courant de 700 nA ont permis de détecter deux pics (figure 6) : un pic à la position de 54 eV, énergie caractéristique pour les photons émis d'un échantillon Li métal, et un pic à la position de 48 eV, énergie caractéristique pour les photons émis d'un échantillon Li oxyde.

Le spectre WDS acquis sur le LiF permet de noter une diminution du fond continu à droite du pic du Li métal, ce qui est dû au seuil d'absorption qui se trouve à 54 eV. L'observation de ce phénomène permet d'identifier avec certitude la raie du Li métal.

La formation du Li oxyde peut s'expliquer par l'impact du faisceau électronique sur le LiF. Un mécanisme de séparation moléculaire de la structure cristallographique du LiF pourrait conduire à une réaction des atomes d'oxygènes présents dans le vide secondaire de la microsonde WDS avec le Li conduisant à la formation de Li₂O.

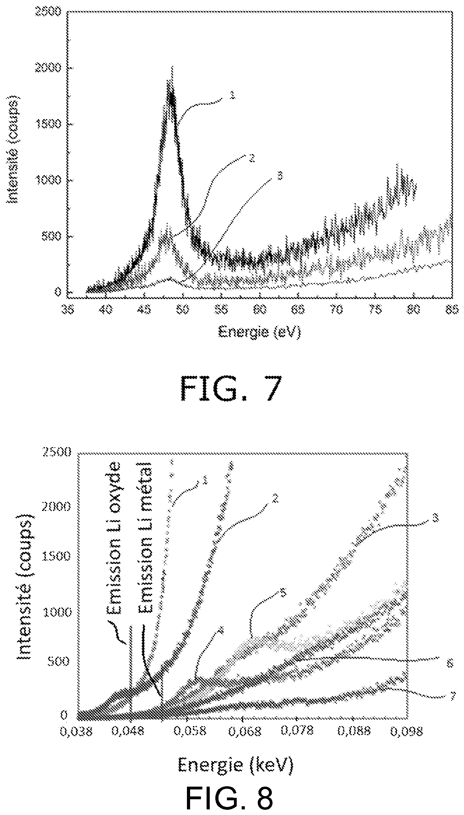

Cette formation de Li₂O augmente avec le temps d'irradiation du faisceau électronique et a pu être observée pour différents courants du faisceau électronique d'irradiation primaire (figure 7), les courbes 1, 2, 3 étant respectivement les spectres obtenus pour le LiF avec un courant de 700 nA (courbe 1), 575 nA (courbe 2) et 207 nA (courbe 3).

L'optimisation de la microsonde WDS selon l'invention pour les X mous permet la mesure de l'intensité des photons dans le domaine spectral de 0,038 keV à 0,120 keV.

Elle permet donc la mesure de nombreuses raies d'émissions de faibles énergies, comme par exemple pour les éléments Fe, Co, Ni, Al, Cu, Zn, Si, qui sont listés dans le tableau 1 ci-dessous.

**[Tableau 1]**

| élément | Fe | Co | Ni | Al | Cu | Zn | Si |
|---|---|---|---|---|---|---|---|
| Raie d'émission | M_{II,III} | M_{II,III} | M_{III}, M_{II} | L_{II,III} | M_{III}, M_{II} | M_{III,IV,V}, M_{II,IV,V} | L_{II,III} |
| Position (keV) | 0,0512 | 0,0577 | 0,0649 0,0670 | 0,0725 | 0,0725 0,0743 | 0,0789, 0,0810 | 0,0922 |
| Numéro de la courbe | 7 | 3 | 4 | 1 | 5 | 6 | 2 |

La position de ces raies a pu être mesurée à partir d'échantillons purs. Les résultats sont présentés en figure 8 (le numéro des courbes est indiqué dans le tableau 1) et permettent de montrer une augmentation du niveau du fond continu avec l'énergie de la raie d'émission.

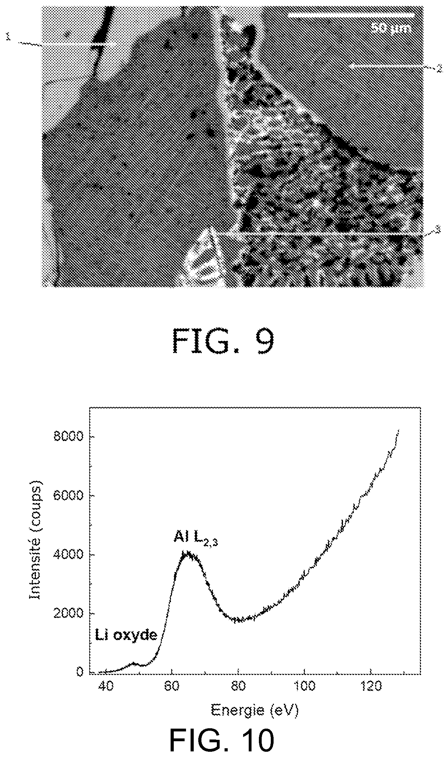

Des mesures de spectres WDS ont également été effectuées sur un matériau quasi cristallin multiphasé. Les différentes phases de ce matériau sont illustrées par la micrographie électronique de la figure 9 : la phase en gris clair (notée 1) a une composition Al₅Li₃Cu, la phase en blanc (notée 2) a une composition Al₂LiCu et la phase en gris foncé (notée 3) est composée d'Al pur.

La microsonde WDS optimisée selon l'invention permet de séparer clairement les raies Li Kα et AI L_{II,III} de la phase de composition Al₅Li₃Cu (figure 10).

Compte tenu des nombreux matériaux d'intérêt composés d'alliages d'Al et de Li, ce résultat est très encourageant et présente un avantage par rapport à la détection du Li avec un spectromètre EDS sans fenêtres de séparation (document [2]).

À partir des mesures obtenues avec les spectres WDS de la raie AI L_{II,III} et de la raie Li Kα, il est possible de déterminer la résolution du système de détection (appelée aussi pouvoir séparateur) amélioré selon l'invention.

Pour les métaux, l'endroit où la dérivée seconde est égale à zéro sur le côté droit de de la raie d'émission correspond au niveau de Fermi. Pour la raie Al L_{II,III} mesurée, cette position est égale à 73,4 eV, tandis que la valeur de l'émission tabulée est de 72,5 eV dans le tableau 1 ; le spectromètre a donc une résolution de 0,9 eV à cette énergie.

Pour le Li métal, qui a une émission tabulée à 54,25 eV, le point d'inflexion (dérivée seconde égale à zéro) pour notre mesure est à 53,9 eV ; la résolution du spectromètre est donc de 0,35 eV à cette énergie.

La microsonde WDS optimisée selon l'invention permet ainsi d'obtenir une résolution de mesure du spectromètre de 0,35 eV pour le Li.

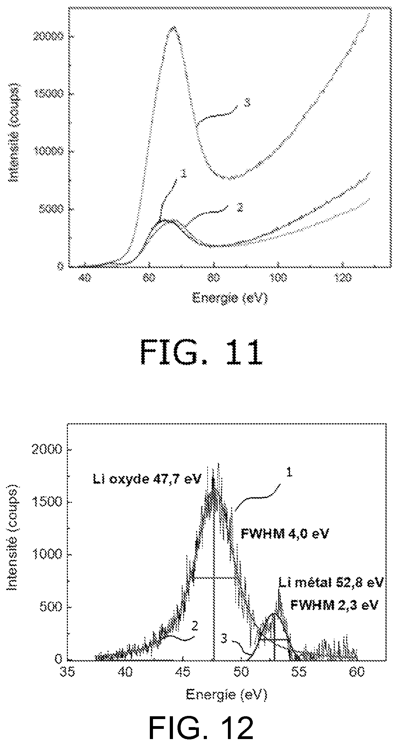

La comparaison des spectres WDS sur les trois différentes phases du matériau quasi cristallin multiphasé (figure 11) montre que leur différenciation est possible en étudiant la forme de la raie détectée. Pour rappel, dans la figure 11, la courbe 1 est le spectre de la phase en gris clair de composition Al₅Li₃Cu ; la courbe 2 est le spectre de la phase en blanc de composition Al₂LiCu ; la courbe 3 est le spectre de la phase en gris foncé en Al pur. La forme de la raie détectée résulte de l'interférence de différents signaux et contient toujours des informations sur la matrice de l'échantillon. La microsonde WDS optimisée selon l'invention permet donc de faire des analyses élémentaires.

### Calcul du facteur de forme spécifique à la forme chimique du lithium

La haute résolution des pics mesurés avec la microsonde WDS optimisée selon l'invention permet le calcul du facteur de forme APF (pour « Area/peak factor » en anglais) pour une raie mesurée.

L'introduction d'un facteur de forme aire/pic est un concept utile qui est sensible aux associations chimiques de l'élément et de la matrice de l'échantillon (document **[4]).** Ce facteur peut être compris comme suit : il existe une proportion fixe entre le k-ratio calculé avec l'intensité intégrale (aire) du pic et le k-ratio standard, calculé avec l'intensité maximale.

L'APF peut être calculé pour une intensité d'un échantillon donné modèle et un spectromètre donné, et peut être utilisé dans d'autres séries de mesures comme paramètre de pondération pour l'intensité maximale par rapport à l'intensité intégrale d'un standard. À ce stade, il est important de mentionner qu'il n'y a pas de raison que deux états chimiques d'un élément mènent à la même forme de bande d'émission (et ils peuvent donc être différentiés).

L'avantage du calcul du facteur APF est que d'autres mesures dans des conditions similaires peuvent simplement être effectuées sur le maximum de la raie. Attention, le facteur APF ne doit pas être confondu avec le FWHM, qui est souvent insensible aux altérations de la forme des raies.

Il est donc possible de remonter à la signature chimique du lithium par le calcul des facteurs APF. La figure 12 montre le spectre acquis sur le LiF (courbe 1) avec un ajustement des raies d'émission par une fonction Pseudo-Voigt après soustraction du bruit de fond (courbe 2, pour le Li oxyde ; courbe 3, pour le Li métal).

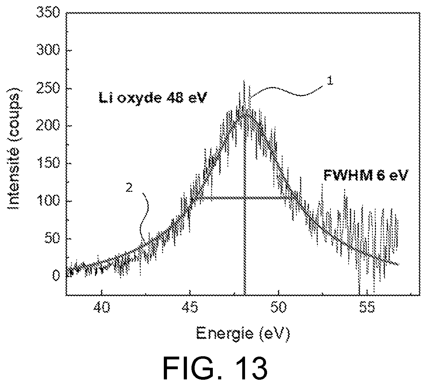

De même, la figure 13 montre le spectre WDS traité de la phase Al₅Li₃Cu (courbe 1) du quasi cristal Al₅Li₃Cu-Al₂LiCu et l'ajustement de la raie d'émission du Li oxyde par une fonction Pseudo-Voigt après soustraction du bruit de fond (courbe 2).

Les ajustements des raies d'émission ont permis de calculer leur position centrale et leur FWHM. Les ajustements Pseudo-Voigt ont été normalisés par la suite pour comparer l'aire des raies. Le tableau 2 liste les résultats des traitements de spectres.

On précise que le calcul du facteur APF se fait par rapport à l'aire du pic d'intensité émise du Li métal.

**[Tableau 2]**

| Émission | Li métal | Li oxyde (LiF) | Li oxyde (quasi cristal) |
|---|---|---|---|
| Centre (eV) | 52,8 | 47,7 | 48,1 |
| FWHM (eV) | 2,3 | 4,0 | 5,1 |
| Aire (eV) | 2,5 | 4,3 | 6,0 |
| APF | 1 | 1,72 | 2,4 |

Les facteurs APF permettent de tenir compte de la signature chimique du Li dans l'échantillon. En effet, la résolution du spectromètre reste inchangée pour les deux positions énergétiques des raies d'émission Li métal et Li oxyde ; l'élargissement du pic du Li oxyde beaucoup plus important implique donc que la bande d'émission du Li oxyde doit être plus large (DOS plus large).

Ainsi, la microsonde WDS optimisée selon l'invention permet donc, grâce à sa bonne résolution, d'acquérir des spectres qui donnent de l'information sur la largeur naturelle de l'émission et cette information n'est pas noyée dans du bruit ou dans l'élargissement gaussien du spectromètre WDS.

En conclusion, la microsonde WDS optimisée selon l'invention a été utilisée sur différents types d'échantillons tels que du LiF, du Al₂LiCu et du Al₅Li₃Cu. Des mesures des éléments purs présentant des raies d'émission à proximité de la raie du Li (Fe, Co, Ni, Al, Cu, Zn, Si) ont également été effectuées. Ces différentes mesures ont permis de montrer l'intérêt de l'invention par rapport aux techniques de l'art antérieur.

Un des avantages d'une microanalyse X en utilisant la microsonde WDS optimisée selon l'invention par rapport à une technique SXES (qui pourrait être une technique concurrente de la microanalyse X) est son moindre coût, sa facilité de mise en œuvre et sa bonne efficacité. Elle permet d'obtenir des informations de grande qualité pour la caractérisation des matériaux et d'accéder à l'analyse qualitative, puis quantitative en utilisant des calculs de correction (méthode ZAF et φ(ρz)). Un autre avantage de l'invention est qu'il est possible d'optimiser tout type de microsonde de Castaing équipée d'un spectromètre à cercle de Rowland pouvant recevoir un pseudo cristal multicouche.

### RÉFÉRENCES CITÉES

**[1]** M. Golozar et al., "In Situ and In Operando Techniques to Study Li-lon and Solid-State Batteries: Micro to Atomic Level", *Inorganics,* 9(11), 2021, page 85
**[2]** P. Hovington et al., "Can we detect Li K X-ray in lithium compounds using energy dispersive spectroscopy?", Scanning, 38, 2016, pages 571-578
**[3]** J. A. Österreicher et al., "Spatial lithium quantification by backscattered electron microscopy coupled with energy-dispersive X-ray spectroscopy", Scripta Materialia, 194, 2021, 113664
**[4]** G. F. Bastin et al., "Quantitative Electron Probe Microanalysis of Carbon in Binary Carbides; I-Principles and Procedures", X-Ray Spectrometry, 15, 1986, pages 135-141

## Revendications

1. Microsonde WDS (1) optimisée pour une détection de lithium dans un échantillon (9), la microsonde WDS comprenant une microsonde de Castaing (2) couplée à un spectromètre WDS (3), l'échantillon (9), inclus dans une enceinte de la microsonde de Castaing, étant destiné à être bombardé par un faisceau (7) d'électrons, pour émettre des photons X, qui sont destinés à être diffractés par un cristal monochromateur (12) inclus dans le spectromètre WDS, des rayons X diffractés pénétrant dans un compteur proportionnel (13), et un spectre WDS étant obtenu, la microsonde WDS étant **caractérisée en ce que** :
- le cristal monochromateur (12) du spectromètre WDS est un pseudo cristal multicouche (16) ayant un domaine spectral incluant les longueurs d'onde d'émission du lithium sous sa forme métal et sous au moins l'une de ses formes oxydes, le pseudo cristal multicouche étant un empilement de n ensembles de quatre couches, n étant un nombre entier compris entre 20 et 30, déposés sur un substrat (17), les quatre couches (19, 20, 21, 22) formant une période d'empilement d de 19,7 nm, les quatre couches étant respectivement une couche de silicium pur, une couche de bore pur, une couche de carbure de bore, une couche de carbure de silicium ;
- une première fenêtre (15) de séparation est disposée à une interface entre le spectromètre WDS et l'enceinte de la microsonde de Castaing ;
- une deuxième fenêtre (15) de séparation est disposée à une entrée du compteur proportionnel, les rayons X diffractés traversant cette deuxième fenêtre de séparation en pénétrant dans le compteur proportionnel ;
- chacune des première et deuxième fenêtres de séparation étant un film en nitrure de silicium, d'une épaisseur comprise entre 18 nm et 22 nm ;
- chaque film en nitrure de silicium étant supporté par une grille (23) en silicium polycristallin, d'une épaisseur comprise entre 7,5 µm et 8,5 µm, déposée sur l'une des deux faces du film en nitrure de silicium ;
- le film en nitrure de silicium de la deuxième fenêtre de séparation comprenant en outre un film en aluminium, d'une épaisseur comprise entre 1 nm et 2 nm, déposée sur l'autre des deux faces du film en nitrure de silicium ;
- lorsque l'échantillon est bombardé par le faisceau d'électrons, le spectromètre WDS est destiné à être maintenu sous une pression inférieure à 9,1.10⁻¹ Pa et l'enceinte de la microsonde de Castaing est destinée à être maintenue sous une pression comprise entre 9,3.10⁻⁵ Pa et 2,5.10⁻⁵ Pa;
- un moyen (24) pour protéger la première fenêtre de séparation d'une surpression ou d'une sous pression lors de l'introduction ou le retrait de l'échantillon dans l'enceinte de la microsonde de Castaing.

2. Microsonde WDS optimisée selon la revendication 1, dans laquelle chaque grille est munie d'une pluralité de trous ayant une dimension comprise entre 0,323 mm et 0,343 mm, les trous ayant de préférence une section droite de forme hexagonale.

3. Microsonde WDS optimisée selon la revendication 1 ou la revendication 2, dans laquelle le moyen (24) pour protéger la première fenêtre de séparation d'une surpression ou d'une sous pression est une vanne de réduction automatique du flux, qui est placée en amont d'un système (25) de pompage primaire de la microsonde électronique de Castaing.

4. Procédé de détection du lithium dans un échantillon à l'aide d'une microsonde WDS selon l'une quelconque des revendications 1 à 3, comprenant :
- une mise en place de l'échantillon (9) dans la microsonde WDS ;
- une application d'une pression inférieure à 9,1.10⁻¹ Pa dans le spectromètre WDS et d'une pression comprise entre 9,3.10⁻⁵ Pa et 2,5.10⁻⁵ Pa dans l'enceinte de la microsonde de Castaing ;
- un bombardement d'une zone de l'échantillon avec un faisceau (7) d'électrons, de manière à ce qu'il émette des rayons X;
- une diffraction des rayons X par le cristal monochromateur (12);
- un comptage des rayons X diffractés pénétrant dans le compteur proportionnel (13);
- une obtention d'un spectre WDS de l'échantillon ;
- si l'échantillon comporte du lithium dans la zone bombardée, une détection du lithium par identification d'une ou plusieurs raies d'émission du lithium dans le spectre WDS obtenu.

5. Procédé de détection selon la revendication 4, dans lequel le faisceau d'électrons est obtenu par application d'une tension d'accélération de 5 kV et d'un courant de 700 nA.

6. Procédé de détection selon la revendication 4 ou la revendication 5, comprenant en outre, pour chaque raie d'émission du lithium identifiée :
- une soustraction d'un bruit de fond et un ajustement par une fonction Pseudo-Voigt, pour calculer une intensité de ladite raie d'émission du lithium identifiée ;
- un calcul d'un facteur de forme de ladite raie d'émission du lithium identifiée en prenant comme référence une intensité de la raie d'émission du lithium sous forme métal ;
- une comparaison du facteur de forme calculé avec des facteurs de forme attribués respectivement à une raie d'émission du lithium sous forme métal et à une ou plusieurs raies d'émission du lithium sous une forme oxyde ;
- une détermination du facteur de forme attribué qui est le plus proche du facteur de forme calculé, moyennant quoi on déduit si le lithium détecté est sous forme métal ou sous forme oxyde.

## Patentansprüche

1. Optimierte WDS-Mikrosonde (1) für die Erkennung von Lithium in einer Probe (9), wobei die WDS-Mikrosonde eine Castaing-Mikrosonde (2) umfasst, die mit einem WDS-Spektrometer (3) gekoppelt ist, wobei die Probe (9), die in einem Gehäuse der Castaing-Mikrosonde eingeschlossen ist, dazu bestimmt ist, von einem Elektronenstrahl (7) beschossen zu werden, um X-Photonen zu emittieren, die dazu bestimmt sind, von einem Monochromatorkristall (12), der im WDS-Spektrometer eingeschlossen ist, gebeugt zu werden, wobei die gebeugten Röntgenstrahlen in einen Proportionalzähler (13) eintreten, und wobei ein WDS-Spektrum erhalten wird, wobei die WDS-Mikrosonde **dadurch gekennzeichnet ist, dass**:
- der Monochromatorkristall (12) des WDS-Spektrometers ein mehrschichtiger Pseudokristall (16) mit einem Spektralbereich ist, der die Emissionswellenlängen von Lithium in seiner Metallform und in mindestens einer seiner Oxidformen einschließt, wobei der mehrschichtige Pseudokristall ein Stapel aus n Sätzen von vier Schichten ist, wobei n eine ganze Zahl zwischen 20 und 30 ist, die auf einem Substrat (17) abgelagert sind, wobei die vier Schichten (19, 20, 21, 22) eine Stapelperiode d von 19,7 nm bilden, wobei die vier Schichten jeweils eine reine Siliziumschicht, eine reine Borschicht, eine Borkarbidschicht, eine Siliziumkarbidschicht sind;
- ein erstes Trennfenster (15) an einer Schnittstelle zwischen dem WDS-Spektrometer und dem Gehäuse der Castaing-Mikrosonde angeordnet ist;
- ein zweites Trennfenster (15) an einem Eingang des Proportionalzählers angeordnet ist, wobei die gebeugten Röntgenstrahlen dieses zweite Trennfenster durchdringen, wenn sie in den Proportionalzähler eintreten;
- wobei jedes der ersten und zweiten Trennfenster eine Siliziumnitridfolie mit einer Dicke zwischen 18 nm und 22 nm ist;
- jede Siliziumnitridfolie von einem Gitter (23) aus polykristallinem Silizium mit einer Dicke zwischen 7,5 µm und 8,5 µm getragen wird, das auf einer der beiden Seiten der Siliziumnitridfolie aufgetragen wird;
- die Siliziumnitridfolie des zweiten Trennfensters weiter eine Aluminiumfolie mit einer Dicke zwischen 1 nm und 2 nm umfasst, die auf die andere der beiden Seiten der Siliziumnitridfolie aufgetragen wird;
- wenn die Probe vom Elektronenstrahl beschossen wird, das WDS-Spektrometer dafür vorgesehen ist, unter einem Druck von unter 9,1.10⁻¹ Pa gehalten zu werden, und das Gehäuse der Castaing-Mikrosonde dafür vorgesehen ist, unter einem Druck zwischen 9,3.10⁻⁵ Pa und 2,5.10⁻⁵ Pa gehalten zu werden;
- ein Mittel (24) zum Schutz des ersten Trennfensters vor Über- oder Unterdruck beim Einführen oder Entfernen der Probe in das Gehäuse der Castaing-Mikrosonde.

2. Optimierte WDS-Mikrosonde nach Anspruch 1, wobei jedes Gitter mit einer Vielzahl von Löchern mit einer Größe zwischen 0,323 mm und 0,343 mm versehen ist, wobei die Löcher vorzugsweise einen geraden Abschnitt in Sechskantform aufweisen.

3. Optimierte WDS-Mikrosonde nach Anspruch 1 oder Anspruch 2, wobei das Mittel (24) zum Schutz des ersten Trennfensters vor Über- oder Unterdruck ein automatisches Durchflussreduzierventil ist, das einem Primärpumpsystem (25) der elektronischen Mikrosonde von Castaing vorgeschaltet ist.

4. Verfahren zur Erkennung von Lithium in einer Probe unter Verwendung einer WDS-Mikrosonde nach einem der Ansprüche 1 bis 3, umfassend:
- ein Einsetzen der Probe (9) in die WDS-Mikrosonde;
- ein Anwenden eines Drucks von weniger als 9,1.10⁻¹ Pa im WDS-Spektrometer und eines Drucks zwischen 9,3.10⁻⁵ Pa und 2,5.10⁻⁵ Pa im Gehäuse der Castaing-Mikrosonde;
- ein Beschuss eines Bereichs der Probe mit einem Elektronenstrahl (7), sodass dieser Röntgenstrahlen aussendet;
- ein Beugen der Röntgenstrahlung durch den Monochromatorkristall (12);
- ein Zählen der gebeugten Röntgenstrahlen, die in den Proportionalzähler (13) eintreten;
- Erhalten eines WDS-Spektrums der Probe;
- wenn die Probe Lithium im beschossenen Bereich aufweist, eine Lithiumerkennung durch Identifizieren eines oder mehrerer Lithiumemissionslinien im erhaltenen WDS-Spektrum.

5. Erkennungsverfahren nach Anspruch 4, wobei der Elektronenstrahl durch Anwenden einer Beschleunigungsspannung von 5 kV und eines Stroms von 700 nA erhalten wird.

6. Erkennungsverfahren nach Anspruch 4 oder Anspruch 5, weiter umfassend für jede identifizierte Lithiumemissionslinie:
- ein Subtrahieren eines Hintergrundrauschens und ein Anpassen durch eine Pseudo-Voigt-Funktion, um eine Intensität der identifizierten Lithiumemissionslinie zu berechnen;
- ein Berechnen eines Formfaktors der identifizierten Lithiumemissionslinie unter Bezugnahme auf eine Intensität der Lithiumemissionslinie in Metallform;
- ein Vergleichen des berechneten Formfaktors mit Formfaktoren, die jeweils einer Emissionslinie des Lithiums in Metallform und einem oder mehreren Emissionslinien des Lithiums in Oxidform zugeordnet sind;
- ein Bestimmen des zugewiesenen Formfaktors, der dem berechneten Formfaktor am nächsten kommt, anhand dessen abgeleitet wird, ob das erkannte Lithium in Metallform oder in Oxidform vorliegt.

## Claims

1. Optimised WDS microprobe (1) for lithium detection in a sample (9), the WDS microprobe comprising an electron probe microanalyser (2) coupled to a WDS spectrometer (3), the sample (9), included in an enclosure of the electron probe microanalyser, being intended to be bombarded by an electron beam (7), to emit X-photons, which are intended to be diffracted by a monochromator crystal (12) included in the WDS spectrometer, diffracted X-rays entering a proportional counter (13), and a WDS spectrum being obtained, the WDS microprobe being **characterised in that**:
- the monochromator crystal (12) of the WDS spectrometer is a multi-layer pseudo-crystal (16) having a spectral region including the emission wavelengths of lithium in its metal form and in at least one of its oxide forms, the multi-layer pseudo-crystal being a stack of n sets of four layers, n being an integer between 20 and 30, deposited on a substrate (17), the four layers (19, 20, 21, 22) forming a stacking period d of 19.7 nm, the four layers being a pure silicon layer, a pure boron layer, a boron carbide layer, a silicon carbide layer, respectively;
- a first separation window (15) is arranged at an interface between the WDS spectrometer and the enclosure of the electron probe microanalyser;
- a second separation window (15) is arranged at an entrance of the proportional counter, the diffracted X-rays passing through this second separation window entering the proportional counter;
- each of the first and second separation windows being a silicon-nitride film, of a thickness of between 18 nm and 22 nm;
- each silicon-nitride film being supported by a polycrystalline silicon grid (23), of a thickness of between 7.5 µm and 8.5 µm, that is deposited on one of the two faces of the silicon-nitride film;
- the silicon-nitride film of the second separation window further comprising an aluminium film, of a thickness of between 1 nm and 2 nm, that is deposited on the other of the two faces of the silicon-nitride film;
- when the sample is bombarded by the electron beam, the WDS spectrometer is intended to be kept at a pressure of less than 9.1.10⁻¹ Pa and the enclosure of the electron probe microanalyser is intended to be kept at a pressure of between 9.3.10⁻⁵ Pa and 2.5.10⁻⁵ Pa;
- a means (24) for protecting the first separation window from over-pressure or under-pressure during introduction or removal of the sample from the enclosure of the electron probe microanalyser.

2. Optimised WDS microprobe according to claim 1, wherein each grid is provided with a plurality of holes having a dimension of between 0.323 mm and 0.343 mm, the holes preferably having a hexagonal-shaped cross-section.

3. Optimised WDS microprobe according to claim 1 or claim 2, wherein the means (24) for protecting the first separation window from over-pressure or under-pressure is an automatic flow reduction valve, which is placed upstream of a primary pumping system (25) of the electron beam microanalyser.

4. Method for detecting lithium in a sample using a WDS microprobe according to any one of claims 1 to 3, comprising:
- placing the sample (9) in the WDS microprobe;
- applying a pressure of less than 9.1.10⁻¹ Pa in the WDS spectrometer and a pressure of between 9.3.10⁻⁵ Pa and 2.5.10⁻⁵ Pa in the enclosure of the electron beam microanalyser;
- bombarding a zone of the sample with an electron beam (7) so that it emits X-rays;
- diffracting X-rays by the monochromator crystal (12);
- counting the diffracted X-rays entering the proportional counter (13);
- obtaining a WDS spectrum of the sample;
- if the sample comprises lithium in the bombarded zone, detecting lithium by identification of one or more lithium emission lines in the obtained WDS spectrum.

5. Detection method according to claim 4, wherein the electron beam is obtained by applying an acceleration voltage of 5 kV and a current of 700 nA.

6. Detection method according to claim 4 or 5, further comprising, for each identified lithium emission line:
- subtracting a background noise and adjusting by a pseudo-Voigt function, to calculate an intensity of said identified lithium emission line;
- calculating a form factor of said lithium emission line identified by taking as a reference an intensity of the lithium emission line in metal form;
- comparing the calculated form factor with form factors assigned respectively to an emission line of the lithium in metal form and to one or more emission lines of the lithium in an oxide form;
- determining the assigned form factor that is closest to the calculated form factor, by means of which it is deduced whether the detected lithium is in metal form or in oxide form.
